# EUROPEAN PATENT SPECIFICATION

(11) **EP 3 932 595 B1**
(45) Date of publication and mention of the grant of the patent: **16.10.2024**
(21) Application number: 20315332.5
(22) Date of filing: 30.06.2020
(51) Int. Cl.: B23B 27/00

(54) **BORING BAR AND A NON-ROTATING BORING TOOL AND A BORING ARRANGEMENT COMPRISING SUCH A BORING BAR**
BOHRSTANGE UND NICHTDREHENDES BOHRWERKZEUG UND BOHRANORDNUNG MIT EINER SOLCHEN BOHRSTANGE
BARRE D'ALÉSAGE ET OUTIL DE FORAGE NON ROTATIF ET AGENCEMENT DE FORAGE COMPRENANT UNE TELLE BARRE D'ALÉSAGE

(43) Date of publication of application: 05.01.2022
(73) Proprietor: Seco Tools Tooling Systems, 67330 Bouxwiller (FR)
(72) Inventor: Groll, Yannick, 67330 Bouxwiller (FR); Ostermann, Mathieu, 67310 Sommerau (FR); Krumhorn, Pascal, 67350 Dauendorf (FR)
(74) Representative: Sandvik

(56) References cited:
- EP-A1- 1 693 131
- EP-A1- 3 511 112
- WO-A1-2021/224378
- US-A- 5 170 103
- US-A- 5 913 955

## Description

### FIELD OF THE INVENTION AND PRIOR ART

The present invention relates to a boring bar according to the preamble of claim 1. The invention also relates to a non-rotating boring tool and a boring arrangement comprising such a boring bar.

A cantilever boring bar with a cutting element at its free end may be used for performing different types of machining operations, such as for instance internal or external turning, on a rotating workpiece of metallic material. During the machining operations, the cutting element is subjected to cutting forces from the rotating workpiece, including a radial force directed along a line that extends perpendicularly to the axis of rotation of the workpiece and intersects the axis of rotation and the point of contact between the cutting element and the workpiece and a tangential force directed perpendicularly to the radial force and in the tangential direction of the workpiece surface at the point of contact between the cutting element and the workpiece. These mutually perpendicular cutting forces will induce vibrations in the boring bar, which in its turn may cause noise, impaired surface finish of the workpiece, tool breakage and other undesired effects.

Different types of active damping systems have been developed in order to reduce boring bar vibrations caused by the cutting forces on a cutting element at the outer end of a boring bar during machining of a workpiece. Such an active damping system may comprise at least one vibration sensor for sensing the vibration of the boring bar and at least one electrically controlled vibration actuator for generating vibratory forces in the boring bar, wherein the vibration actuator is controlled by an electronic control unit in dependence on measuring signals from the vibration sensor or sensors in order to introduce counter-vibrations in the boring bar that will interfere with and thereby counteract the vibrations induced in the boring bar by the cutting forces.

An active damping system of the above-mentioned type is disclosed in US 5 170 103 A where a vibration actuator is accommodated in a cavity inside the boring bar.

An active damping system may comprise one or more vibration actuators mounted to a machine tool on the outside of the ram thereof, as disclosed in EP 3 511 112 A1, in order to damp vibrations in the ram.

Document EP 3 511 112 A1 discloses the preamble of claim 1.

### OBJECT OF THE INVENTION

The object of the present invention is to provide a boring bar of the above-mentioned type that has a new and favourable design.

### SUMMARY OF THE INVENTION

According to the invention, said object is achieved by means of a boring bar having the features defined in claim 1.

The boring bar according to the invention is configured for use in a non-rotating boring tool and comprises:
- an elongated body configured for attachment to a support structure of a metal cutting machine, the elongated body having a rear end and an opposite front end, the front end being arranged to carry a tool part provided with a cutting element; and
- at least two electrically controlled vibration actuators for active vibration damping of the boring bar.

Each one of said at least two actuators comprises a moveably arranged damping mass and is configured, by movement of the damping mass, to generate vibratory forces in parallel or at least substantially in parallel with a working axis of the actuator that is perpendicular to a centre axis of the damping mass, wherein each one of these at least two actuators is a single-axis actuator having one single working axis, and wherein these at least two actuators are arranged with their working axes angularly offset from each other. Furthermore, said at least two actuators are arranged in a longitudinal series in the elongated body with the centre axis of the damping mass of each one of these actuators coinciding or substantially coinciding with a longitudinal axis of the elongated body. Thus, the damping masses of the at least two actuators are arranged in the elongated body centred on the longitudinal axis of the elongated body, which will simplify the calculations used in the control of the actuators and thereby make it possible to achieve a damping system with good capability of responding to and damping vibrations in the boring bar in an accurate and quick manner.

Furthermore, with the above-mentioned arrangement of said at least two actuators, these actuators are located in the elongated body with their working axes oriented perpendicularly to the longitudinal axis of the elongated body and in mutually different directions. Hereby, the actuators in question may be optimized for counteracting vibrations in different angular directions in relation to the longitudinal axis of the boring bar, which facilitates the achievement of an efficient vibration damping. In this case, a first actuator may for instance be optimized for counteracting vibrations caused by the above-mentioned radial force on the cutting element and another actuator may be optimized for counteracting vibrations caused by the above-mentioned tangential force on the cutting element. In the latter case, it is suitable to use two actuators arranged with their working axes extending perpendicularly to each other, owing to the fact that said radial force is perpendicular to said tangential force.

In addition to two or more actuators arranged in the elongated body in the manner defined above, i.e. in addition to the above-mentioned at least two actuators, the boring bar may, if so desired, also comprise one or more additional actuators arranged in any other suitable manner.

According to an embodiment of the invention, said at least two actuators are n in number, wherein n≥2, and are so arranged in the elongated body that each one of these n actuators has its working axis oriented at an angle of 180°/n to another one of these n actuators, wherein these n actuators have their respective working axes evenly angularly distributed, and wherein the working axis of each one of these n actuators has an individual angular orientation that is different from the angular orientations of the working axes of the other ones of these n actuators. Thus, if the actuators in question are two in number they have their working axes oriented at an angle of 90° to each other, if they are three in number they have their working axes oriented at an angle of 60° to each other, and so on. Furthermore, each couple of adjacent actuators are in this case preferably arranged such that their working axes are oriented at an angle of 180°/n to each other, which implies that each one of said n actuators that is arranged next in consecutive order after a preceding one of the n actuators has its working axis oriented at an angle 180°/n to the working axis of the preceding actuator.

According to the invention, the elongated body comprises:
- an elongated main part configured for attachment to a support structure of a metal cutting machine, the main part having a rear end and an opposite front end,
- a front part having a rear end facing the front end of the main part and an opposite front end, the front end of the front part being arranged to carry said tool part, and
- at least one damping module arranged between the front end of the main part and the rear end of the front part and accommodating one or more of said at least two actuators.

The above-mentioned front part of the elongated body is connected to the main part of the elongated body via the at least one damping module, wherein the at least one damping module constitutes a length section of the elongated body. Thus, the main part, the at least one damping module and the front part constitute separate and consecutively arranged length sections of the elongated body, as seen in the longitudinal direction of the elongated body. Hereby, a vibration actuator may be integrated in the elongated body of the boring bar by first mounting the actuator within a casing of an associated damping module and then securing the damping module between the main part and the front part of the elongated body, which will facilitate the assembling of the boring bar. In this case, the working direction of an actuator in relation to the point of contact between the cutting element and the workpiece may, in case of need, be adjusted by adjusting the rotary position of the associated damping module in relation to the front part of the elongated body. Furthermore, by having an actuator accommodated in a separate damping module, the damping characteristics may easily be adapted to the specific needs by modification of the damping module without having to change the other parts of the boring bar. The number of actuators in the boring bar may easily be varied in dependence on the specific needs by varying the number of damping modules arranged between the main part and the front part of the elongated body. The arrangement of an actuator in a separated damping module arranged between a main part and a front part of the elongated body also makes it easy to position the actuator close to the front end of the elongated body, which is a favourable position for the actuator due to the proximity to the cutting element where the vibrations of the boring bar are generated. Furthermore, the use of a separate damping module makes it easier to adapt this part of the boring bar to the requirements of the actuator for the purpose of maximizing the damping mass and the stroke of the actuator.

However, in an embodiment not according to the invention, the elongated body of the boring bar may as an alternative lack a separate damping module of the above-mentioned type, wherein said at least two actuators are jointly accommodated in the same cavity inside the elongated body or individually accommodated in separate cavities inside the elongated body.

The at least one damping module preferably has the same cross-sectional outer peripheral shape as the main part and/or the front part. Furthermore, the main part and/or the front part and/or the at least one damping module are with advantage cylindrical, preferably circular cylindrical.

According to an embodiment of the invention, an external periphery of the main part and an external periphery of the at least one damping module are flush or substantially flush with each other. The elongated body of the boring bar may hereby be designed with a smooth outer peripheral surface.

According to another embodiment of the invention, the at least one damping module is clamped between the main part and the front part by means of tie rods, which preferably extend through passages in the at least one damping module. Hereby, the damping module or modules may be fixed between the main part and the front part of the elongated body in a simple and reliable manner. Each one of the tie rods may have a first end fixed to the main part and an opposite second end fixed to the front part.

According to another embodiment of the invention, the elongated body comprises at least two damping modules of the above-mentioned type arranged in series with each other between the front end of the main part and the rear end of the front part, wherein said at least two actuators are arranged in different ones of these damping modules. Hereby, the actuators in question may be integrated in the elongated body of the boring bar in a simple manner. As an alternative, said at least two actuators may be accommodated in one and the same damping module. The at least two damping modules are with advantage arranged to abut against each other. However, some kind of intermediate element may as an alternative be arranged between the at least two damping modules. The front part of the boring bar is preferably arranged with its rear end abutting against the front end of a foremost one of the at least two damping modules. However, some kind of intermediate element may as an alternative be arranged between the front part and the foremost damping module. A rearmost one of the at least two damping modules is preferably arranged with its rear end abutting against the front end of the main part. However, some kind of intermediate element may as an alternative be arranged between the main part and the rearmost damping module.

In order to facilitate the manufacturing of the elongated body, said at least two damping modules are with advantage of the same design and size.

Further advantageous features of the boring bar according to the present invention will appear from the description following below.

The invention also provides a non-rotating boring tool, according to claim 11, comprising a boring bar of the above-mentioned type and a tool part provided with a cutting element, wherein this tool part is detachably attached to or integrally formed with the front end of the elongated body.

According to an embodiment of the invention, said tool part is adjustable in its rotary position in relation to the elongated body. It will hereby be possible to adjust the angular position of the cutting element in relation to the working axes of said at least two actuators in order to optimize the damping characteristics. According to another embodiment of the invention, the cutting element comprises a rake side, a relief surface and a cutting edge formed at an intersection between the rake side and the relief surface, wherein when seen in a cross-sectional plane that is perpendicular to the longitudinal axis of the elongated body and intersects the cutting edge in a radially outermost point, a straight and imaginary reference line L intersects the cutting edge in the radially outermost point and extends in this cross-sectional plane at an angle of 6° to the relief surface on the outside of the cutting element, and wherein when seen in this cross-sectional plane, the working axis of the actuator closest to the front end of the elongated body:
- forms an angle of 90°±10° to said reference line L, preferably an angle of 90°±5°, more preferably an angle of 90°±1°, or
- forms an angle of 0°±10° to said reference line L, preferably an angle of 0°±5°, more preferably an angle of 0°±1°.

The relief angle of a cutting element of a non-rotating boring tool is normally 6° or close to 6°, which implies that the above-mentioned tangential force on the cutting element will be directed substantially along the reference line L defined above, whereas the above-mentioned radial force on the cutting element will be directed substantially perpendicular to this reference line L. In order to achieve an efficient vibration damping of the boring bar of a non-rotating boring tool, it is favourable to have the working axis of the actuator closest to the front end of the boring bar arranged substantially in parallel with the radial force on the cutting element so as to allow this actuator to efficiently dampen the vibrations caused by this radial force, or substantially in parallel with the tangential force on the cutting element so as to allow this actuator to efficiently dampen the vibrations caused by this tangential force. When the working axis of the actuator closest to the front end of the boring bar is arranged to form an angle of 90°±10° to the above-mentioned reference line L, this actuator will consequently be focused on damping the vibrations in the boring bar caused by the radial force on the cutting element. When the working axis of the actuator in the damping module closest to the front end of the boring bar is arranged to form an angle of 0°±10° to the above-mentioned reference line L, this actuator will instead be focused on damping the vibrations in the boring bar caused by the tangential force on the cutting element.

According to another embodiment of the invention, the boring tool comprises at least one vibration sensor mounted to the elongated body at the front end thereof or to said tool part. Hereby, the vibrations will be detected at a position close to the cutting element, which makes it possible to efficiently counteract the vibrations induced by the cutting forces acting on the cutting element.

Further advantageous features of the boring tool according to the present invention will appear from the description following below.

The invention also provides a boring arrangement, according to claim 15, comprising a boring bar of the above-mentioned type and an electronic control unit configured to control the electric current to said at least two actuators in order to control the generation of vibratory forces in these actuators. The boring arrangement preferably also comprises at least one vibration sensor configured to generate measuring signals related to the vibration of the boring bar and to send the measuring signals to the electronic control unit, wherein the electronic control unit is configured to receive the measuring signals from the at least one vibration sensor and control the electric current to said at least two actuators in dependence on the measuring signals from the at least one vibration sensor in order to control the generation of vibratory forces in these actuators in dependence on these measuring signals.

Further advantageous features of the boring arrangement according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a lateral view of a non-rotating boring tool according to an embodiment of the present invention,
- Fig 2: is a longitudinal section according to the line II-II in Fig 1,
- Fig 3: is an exploded view of the boring tool of Fig 1,
- Fig 4: is an exploded view from another direction of the boring tool of Fig 1,
- Fig 5: is a perspective view of a front end of the boring tool of Fig 1,
- Figs 6a and 6b: are front views of the boring tool of Fig 1,
- Fig 7a: is a perspective view from above of a cutting element included in the boring tool of Fig 1,
- Fig 7b: is a perspective view from below of the cutting element of Fig 7a,
- Fig 7c: is a lateral view of the cutting element of Fig 7a,
- Fig 8a: is a perspective view from above of an alternative cutting element,
- Fig 8b: is a perspective view from below of the cutting element of Fig 8a,
- Fig 8c: is a lateral view of the cutting element of Fig 8a,
- Fig 9: is an outline diagram of a boring arrangement according to an embodiment of the invention,
- Fig 10: is an outline diagram of a boring arrangement according to an alternative embodiment of the invention, and
- Fig 11: is an outline diagram of a boring arrangement according to another alternative embodiment of the invention.

### DETAILED DESCRIPTION OF EMBODIMENTS OF THE INVENTION

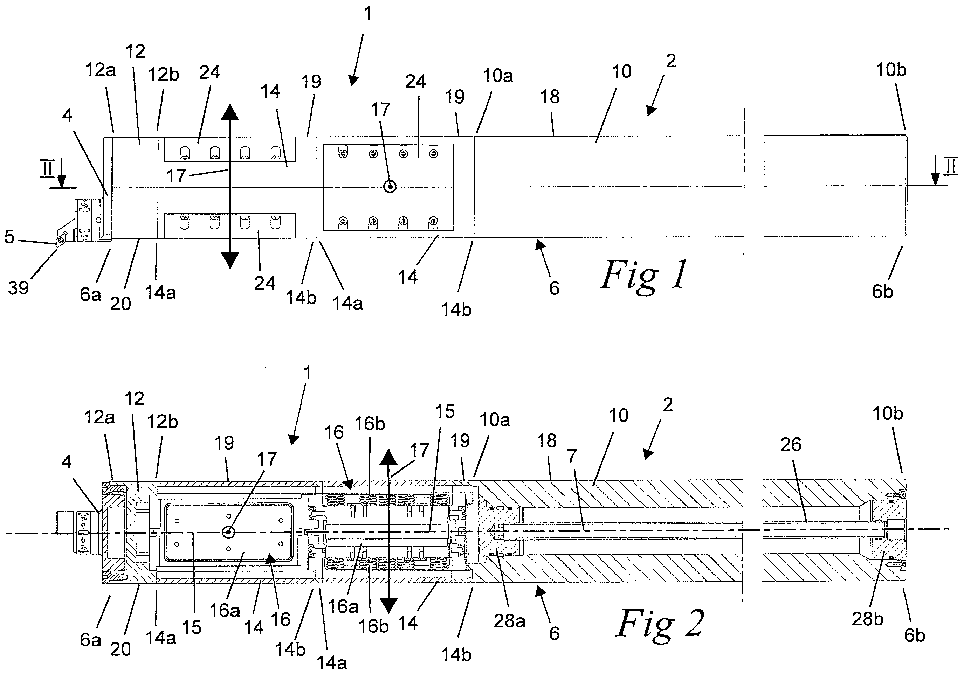

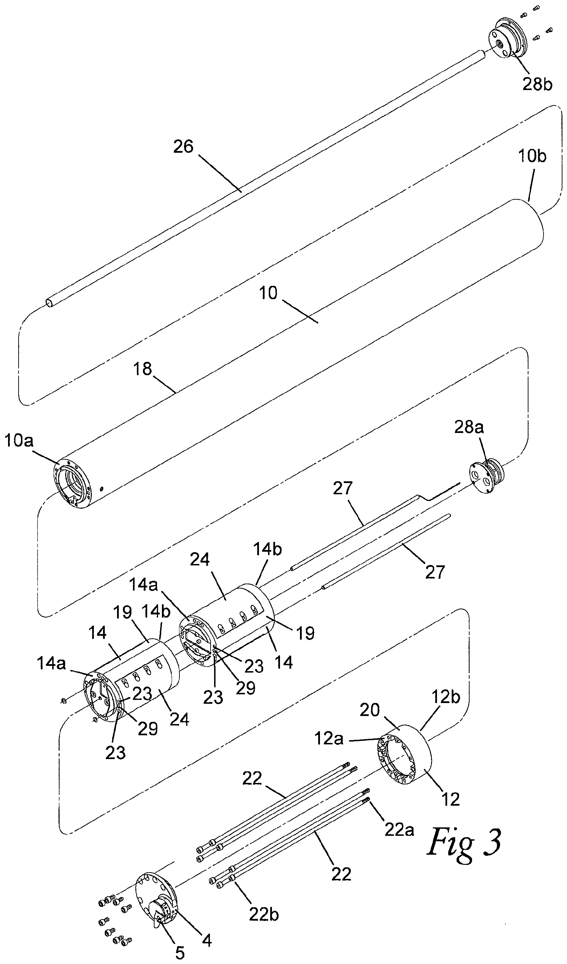

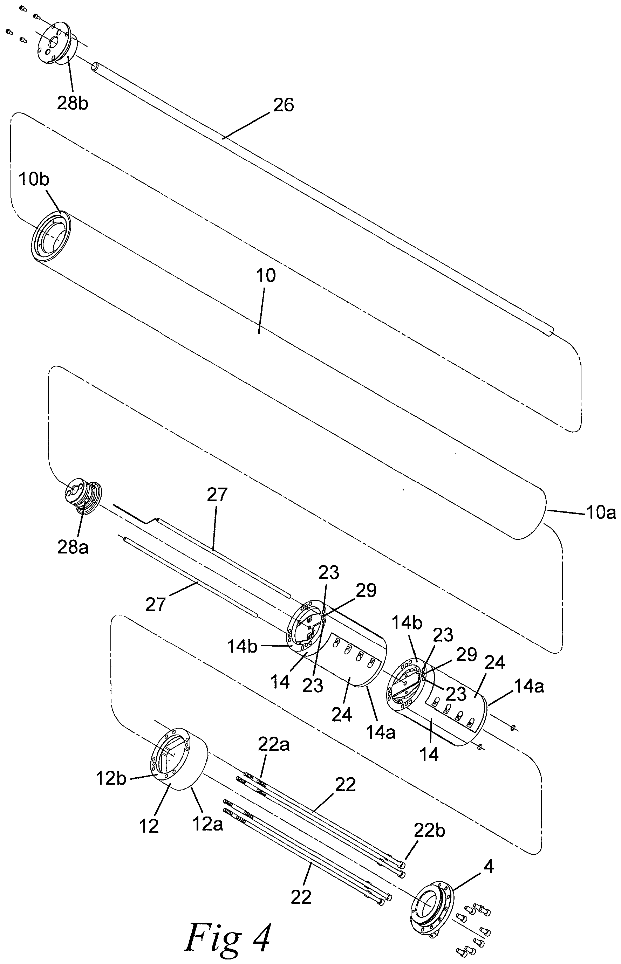

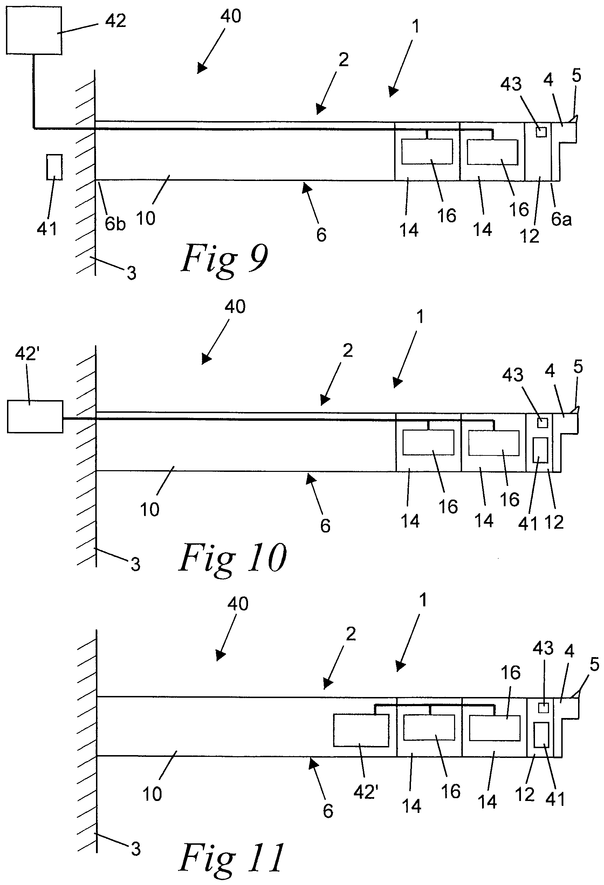

A non-rotating boring tool 1 according to an embodiment of the present invention is illustrated in Figs 1-5. The boring tool 1 is to be used for performing different types of machining operations, such as for instance internal or external turning, on a rotating workpiece of metallic material. The boring tool 1 comprises a boring bar 2, which is to be fixed to a support structure 3 of a metal cutting machine (very schematically illustrated in Figs 9-11) in order to project in a cantilevered manner from this support structure 3. The boring bar 2 comprises an elongated body 6 configured for attachment to the support structure 3 of the metal cutting machine. The elongated body 6 has a rear end 6b and an opposite front end 6a. A longitudinal axis 7 of the elongated body extends between the rear end 6b and the front end 6a of the elongated body.

The boring tool 1 also comprises a tool part 4 provided with a cutting element 5, wherein this tool part 4 is carried by the elongated body 6 and mounted to the elongated body at the front end 6a thereof. As an alternative, the tool part 4 may be integrally formed with the front end 6a of the elongated body, which implies that the tool part 4 and the elongated body 6 are combined into a common component.

The boring bar 2 comprises at least two electrically controlled vibration actuators 16 for active vibration damping of the boring bar 2. Each one of these actuators 16 comprises a moveably arranged damping mass 16a and is configured, by movement of its damping mass, to generate vibratory forces in parallel or at least substantially in parallel with a working axis 17 of the actuator that is perpendicular to a centre axis 15 of the damping mass 16a. Each one of the at least two actuators 16 is a single-axis actuator having one single working axis 17 and these actuators 16 are arranged with their working axes 17 angularly offset from each other. Thus, the actuators 16 are arranged in mutually different rotary positions in the elongated body 6.

Said actuators 16 are configured to generate vibratory forces in order to counteract vibrations induced in the boring bar 2 by cutting forces acting on the cutting element 5 during machining of a rotating workpiece. The vibratory forces generated by the actuators 16 may also be used for intermittently vibrating the cutting element 5 in order to break to pieces larger metal chips cut off from a workpiece by the cutting element 5.

Said actuators 16 are arranged in a longitudinal series in the elongated body 6, i.e. arranged consecutively in the longitudinal direction of the elongated body, with the centre axis 15 of the damping mass 16a of each one of these actuators 16 coinciding or at least substantially coinciding with the longitudinal axis 7 of the elongated body 6. Thus, the working axis 17 of each one of the actuators 16 extends in a cross-sectional plane that is perpendicular to the longitudinal axis 7 of the elongated body 6.

In the embodiment illustrated in Figs 1-5, said actuators 16 are two in number, but the boring bar 2 may as an alternative comprise more than two such actuators 16 arranged in the elongated body 6 such that the working axes 17 of all these actuators are preferably oriented in mutually different directions. The working axes 17 of these actuators 16 are preferably evenly angularly distributed, wherein each one of these actuators 16 has its working axis 17 oriented at an angle of 180°/n to another one of the actuators, where n is an integer corresponding to the number of actuators 16. Thus, when said actuators 16 are two in number they are preferably so arranged in the elongated body 6 that they have their working axes 17 oriented at an angle of 90° to each other, i.e. perpendicular to each other, as illustrated in Figs 1 and 2. When said actuators 16 are three in number they are preferably so arranged in the elongated body 6 that they have their working axes 17 oriented at an angle of 60° to each other, when they are four in number they are preferably so arranged in the elongated body 6 that they have their working axes 17 oriented at an angle of 45° to each other, and so on. Furthermore, the actuators 16 in each couple of adjacent actuators are in this case preferably arranged such that their working axes are oriented at an angle of 180°/n to each other.

In the embodiment illustrated in Figs 1-5, the elongated body 6 of the boring bar 2 is made up of separate parts 10, 12, 14, which are connected to each other and together form the elongated body 6, wherein these parts 10, 12, 14 constitute separate length sections, i.e. separate segments, of the elongated body 6. Thus, these parts 10, 12, 14 constitute consecutive sections of the elongated body 6 of the boring bar, as seen in the longitudinal direction thereof. In this case, the elongated body 6 comprises an elongated main part 10 configured for attachment to the support structure 3 of the metal cutting machine. This main part 10 has a rear end 10b and an opposite front end 10a. The main part 10 is preferably tubular and it is to be attached to said support structure 3 at its rear end 10b. In the illustrated embodiment, the main part 10 is cylindrical and has a circular cross-sectional shape. However, the main part 10 may also have any other suitable cross-sectional shape, such as for instance an elliptical or a polygonal cross-sectional shape.

The elongated body 6 illustrated in Figs 1-5 further comprises a front part 12. This front part 12 has a rear end 12b facing the front end 10a of the main part 10 and an opposite front end 12a. The front end 12a of the front part is arranged to carry the above-mentioned tool part 4. Thus, this tool part 4 is attached to the front part 12 of the boring bar at the front end 12a thereof. As an alternative, the tool part 4 may be integrally formed with the front part 12, which implies that the tool part 4 and the front part 12 are combined into a common component. In the illustrated embodiment, the front part 12 is cylindrical and has a circular cross-sectional shape. However, the front part 12 may also have any other suitable cross-sectional shape, such as for instance an elliptical or a polygonal cross-sectional shape.

The elongated body 6 may also comprise at least one damping module 14 arranged between the front end 10a of the main part 10 and the rear end 12b of the front part 12, wherein this damping module 14 has a rear end 14b facing the main part 10, an opposite front end 14a facing the front part 12. In the illustrated embodiment, the elongated body 6 comprises two such damping modules 14 arranged in series with each other between the front end 10a of the main part 10 and the rear end 12b of the front part 12. Thus, these two damping modules 14 are arranged in series with each other in the longitudinal direction of the elongated body 6. The elongated body 6 may as an alternative comprise more than two damping modules 14 arranged in series with each other in the longitudinal direction of the elongated body or one single damping module 14. The front part 12 is connected to the main part 10 via the damping modules 14.

In the illustrated embodiment, the damping modules 14 are cylindrical and have a circular cross-sectional shape. However, the damping modules 14 may also have any other suitable cross-sectional shape, such as for instance an elliptical or a polygonal cross-sectional shape.

Each one of the damping modules 14 is provided with at least one of the above-mentioned actuators 16, wherein this actuator 16 is arranged in a housing 14c of the associated damping module, the damping mass 16a of the actuator 16 being moveable in relation to this housing 14c. In the illustrated embodiment, the damping mass 16a is moveable in relation to the housing 14c of the damping module 14 against the action of return springs 16b arranged on opposite sides of the damping mass 16a. The actuators 16 may be of electromagnetic type, wherein the vibratory forces are electromagnetically generated.

However, any other suitable type of vibration actuators may also be used.

In the illustrated embodiment, each damping module 14 is provided with one single actuator 16. However, an individual damping module 14 may as an alternative be provided with two or more actuators 16.

In the illustrated embodiment, the damping modules 14 abut directly against each other, wherein the rear end 14b of a foremost one of the damping modules abuts against the front end 14a of the other damping module, i.e. the rearmost damping module. As illustrated in Figs 1-5, the front part 12 may be arranged with its rear end 12b abutting directly against the front end 14a of the foremost damping module and the rearmost damping module may be arranged with its rear end 14b abutting directly against the front end 10a of the main part 10.

An external periphery 18 of the main part 10 and an external periphery 19 of each damping module 14 are with advantage flush or substantially flush with each other, as illustrated in Figs 1, 2 and 5. Furthermore, an external periphery 20 of the front part 12 is with advantage flush or substantially flush with the external periphery 19 of the foremost damping module 14.

In order to facilitate maintenance and repair of the boring bar 2, the main part 10, the damping modules 14 and the front part 12 are preferably detachably mounted to each other. In the illustrated embodiment, the damping modules 14 are clamped between the main part 10 and the front part 12 by means of tie rods 22. Each tie rod 22 has a first end 22a fixed to the main part 10 and an opposite second end 22b fixed to the front part 12. Furthermore, each tie rod 22 extends through mutually aligned passages 23 in the damping modules 14. The different parts 10, 12, 14 of the elongated body 6 may as an alternative be mounted to each other in any other suitable manner.

In the illustrated embodiment, the actuator 16 in each one of the damping modules 14 is accessible through two openings on opposite sides of the damping module, wherein each opening is covered by a detachably mounted cover 24, which forms part of the external periphery 19 of the damping module and which is secured in the associated opening by means of fastening elements 25 in the form of screws. Passages 23 for some of the above-mentioned tie rods 22 may be provided in the covers 24.

In the illustrated embodiment, cooling fluid is supplied to the tool part 4 through a first feed pipe 26, which extends axially through the main part 10 of the elongated body 6, and at least one second feed pipe 27, which extends between the main part 10 and the front part 12 of the elongated body in parallel with the tie rods 22. In the illustrated example, the boring bar 2 is provided with two such second feed pipes 27. The first feed pipe 26 is fixed to the main part 10 of the elongated body by means of a first end piece 28a fixed to the main part 10 at the front end 10a thereof and a second end piece 28b fixed to the main part 10 at the rear end 10b thereof. Each one of the second feed pipes 27 is connected to the first feed pipe 26 via internal channels in the first end piece 28a. Furthermore, each one of the second feed pipes 27 may be arranged to extend through mutually aligned passages 29 in the damping modules 14.

In order to make possible an adjustment of the angular position of the working axes 17 of the actuators 16 in relation to the cutting element 5, the front part 12 of the elongated body 6 may be adjustable in its rotary position in relation to the damping modules 14, which implies that the front part 12 is attachable to the foremost damping module 14 in different selectable rotary positions in relation to this damping module. As an alternative to or in combination with such a rotary adjustability of the front part 12 in relation to the damping modules 14, the tool part 4 provided with the cutting element 5 may be adjustable in its rotary position in relation to the front part 12 of the elongated body, which implies that the tool part 4 is attachable to the front part 12 in different selectable rotary positions in relation to the front part. A damping module 14 may also be arranged such that its actuator 16 may be adjustable in its rotary position in relation to a casing of the damping module. When the damping modules 14 are two or more in number, they may be arranged such that their respective rotary positions may be adjustable in relation to each other.

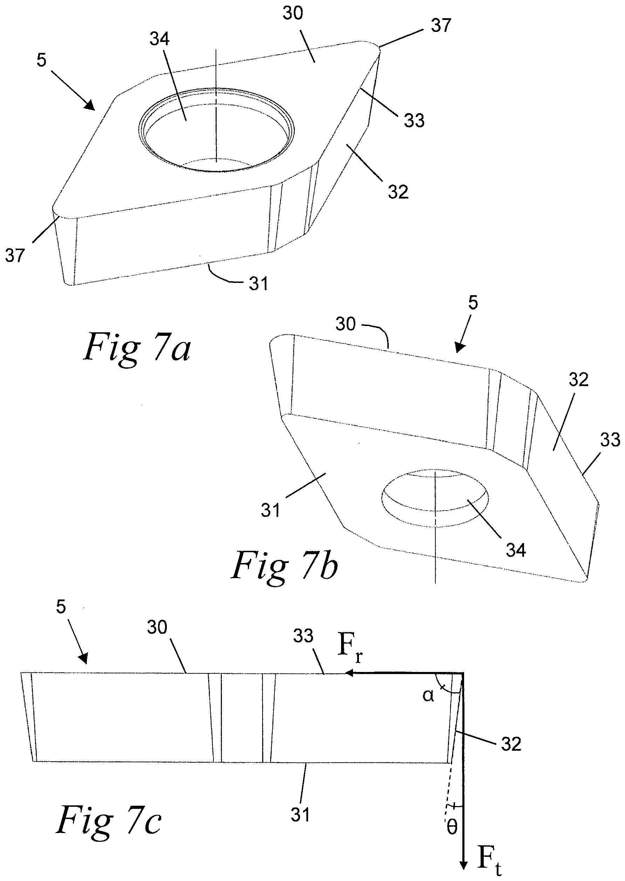

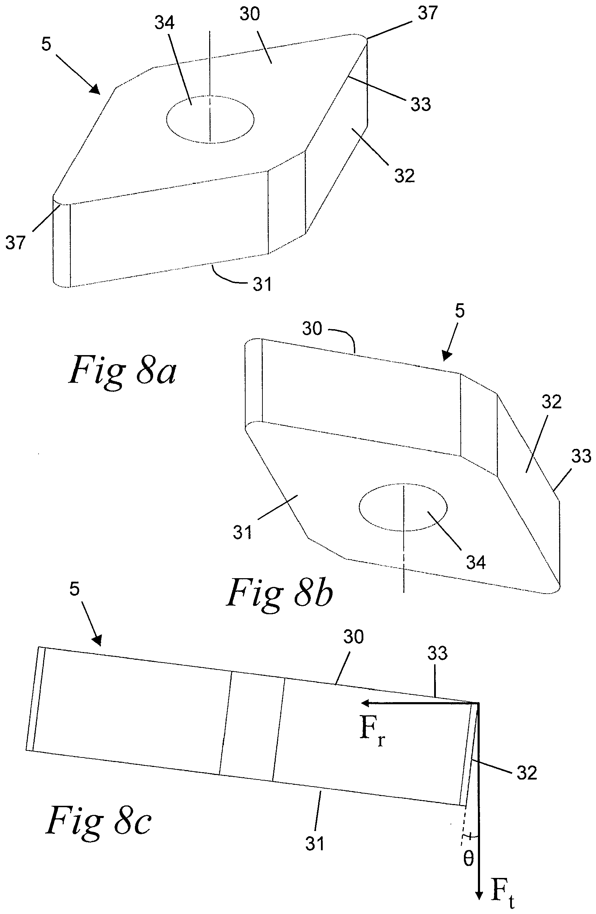

The cutting element 5 fixed to the tool part 4 may be a positive cutting element, as illustrated in Figs 7a-7c, or a negative cutting element, as illustrated in Figs 8a-8c. The cutting element 5 comprises an upper rake side 30, a bottom side 31 extending in parallel or substantially in parallel with the rake side 30 and a peripheral relief surface 32 extending between the rake side 30 and the bottom side 31. A cutting edge 33 is formed at an intersection between the rake side 30 and the relief surface 32. In the illustrated examples, the cutting edge 33 extends all around the rake side 30 along the periphery thereof. In case of a positive cutting element 5, the relief surface 32 extends at an acute angle α to the rake side 30, as illustrated in Fig 7c. In case of a negative cutting element 5, the relief surface 32 extends at a right angle to the rake side 30, as illustrated in Fig 8c.

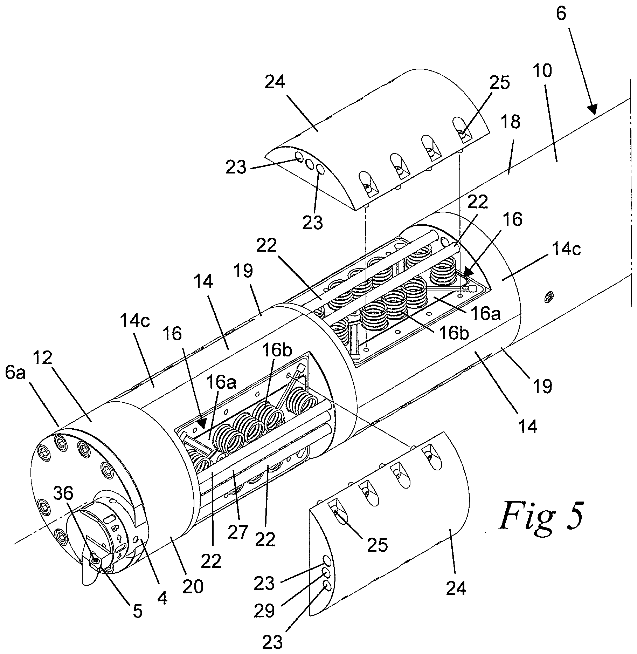

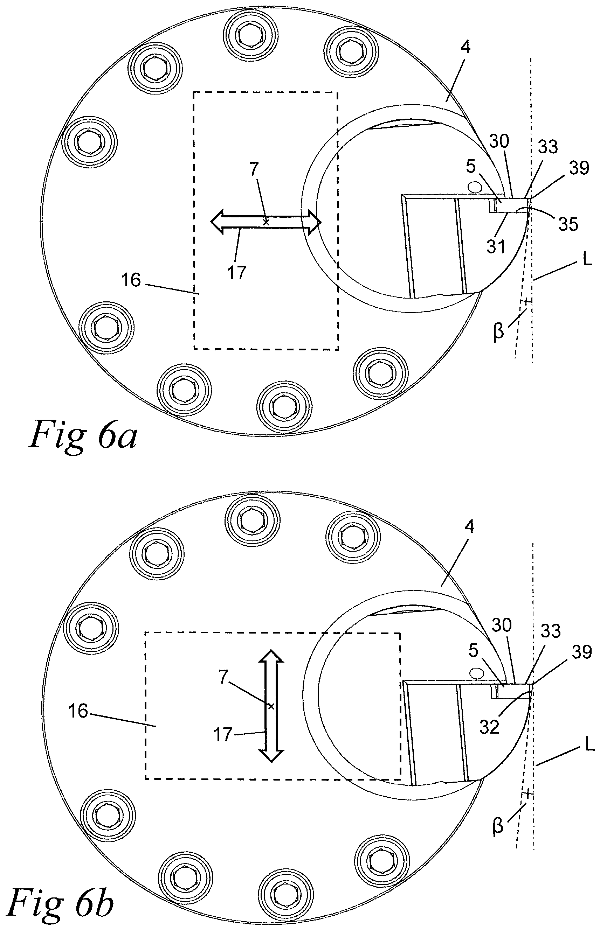

A hole 34 extends across the cutting element 5 between the rake side 30 and the bottom side 31. The cutting element 5 is configured to be releasably mounted to the tool part 4 with the bottom side 31 of the cutting element 5 resting against a support surface 35 (see Fig 6a) on a seat provided for the cutting element in the tool part 4. The cutting element 5 is fixed to said seat in the tool part 4 by means of a fastening element 36 in the form of a screw (see Fig 5), which extends through the hole 34 in the cutting element 5 and is engaged in a threaded hole in the support surface 35 on the seat.

In the illustrated examples, the cutting element 5 comprises two cutting corners 37 located opposite each other on opposite sides of the cutting element. The cutting element 5 is to be fixed to the tool part 4 with one of the cutting corners 37 facing outwards away from the longitudinal axis 7 of the boring bar 2, wherein the cutting element 5 is intended to make contact with a rotating workpiece via this outwardly facing cutting corner 37. During machining of a rotating workpiece, the boring tool 1 is normally so positioned in relation to the workpiece that the above-mentioned tangential force Fₜ on the cutting element 5 will be directed at an angle θ of approximately 6° to the relief surface 32, as illustrated in Figs 7c and 8c.

A straight and imaginary reference line L (see Figs 6a and 6b) is defined in a cross-sectional plane that is perpendicular to the longitudinal axis 7 of the elongated body 6 and that intersects the cutting edge 33 in a radially outermost point 39, wherein this reference line L intersects the cutting edge 33 in the radially outermost point 39 and extends in this cross-sectional plane at an angle β of 6° to the relief surface 32 on the outside of the cutting element 5, i.e. with this angle β measured on the outside of the cutting element 5. Thus, when a positive cutting element 5 of the type illustrated in Figs 7a-7c with a relief angle of 6° is fixed to the tool part 4, the reference line L may extend perpendicularly to the rake side 30 of the cutting element, as illustrated in Figs 6a and 6b.

The actuator 16 closest to the front end 6a of the elongated body 6 is with advantage arranged in such a rotary position in the elongated body 6 that its working axis 17, when seen in the above-mentioned cross-sectional plane, forms an angle of 90°±10° to said reference line L (as illustrated in Fig 6a), preferably an angle of 90°±5°, and more preferably an angle of 90°±1°. In this case, the working axis 17 of this actuator is arranged substantially in parallel with the radial force Fᵣ on the cutting element 5. With such an arrangement of the actuator 16 closest to the front end 6a of the elongated body, this actuator will be optimized for counteracting the vibrations caused by the radial force Fᵣ on the cutting element 5.

According to a favourable alternative, the actuator 16 closest to the front end 6a of the elongated body 6 is arranged in such a rotary position in the elongated body 6 that its working axis 17, when seen in the above-mentioned cross-sectional plane, forms an angle of 0°±10° to said reference line L (as illustrated in Fig 6b), preferably an angle of 0°±5°, and more preferably an angle of 0°±1°. In this case, the working axis 17 of this actuator is arranged substantially in parallel with the tangential force Fₜ on the cutting element 5. With such an arrangement of the actuator 16 closest to the front end 6a of the elongated body, this actuator will be optimized for counteracting the vibrations caused by the tangential force Fₜ on the cutting element 5.

Different embodiments of a boring arrangement 40 comprising a boring bar 2 of the type described above are very schematically illustrated in Figs 9-11. The boring arrangement 40 further comprises an electronic control unit 41, which is configured to control the supply of electric current to the actuators 16 in the elongated body 6 in order to control the generation of vibratory forces in these actuators. The electric current is supplied to the actuators 16 from a power source, which may be an external power source 42, as illustrated in Fig 9, or a power supply unit 42' mounted to the elongated body 6, as illustrated in Fig 11, or to the support structure 3 or any other part of the metal cutting machine, as illustrated in Fig 10. The power supply unit 42' comprises at least one energy storage member, for instance in the form of a battery, for storing electric energy. The electronic control unit 41 may be mounted to the front part 12 of the elongated body 6, as illustrated in Figs 10 and 11, or to any other part of the elongated body. As a further alternative, the electronic control unit 41 may be mounted to the support structure 3 or any other part of the metal cutting machine, as illustrated in Fig 9.

The boring arrangement 40 further comprises at least one vibration sensor 43, for instance in the form of an accelerometer, which is configured to generate measuring signals related to the vibration of the boring bar 2 and to send the measuring signals to the electronic control unit 41 through a wireless connection or a cable connection. Said at least one vibration sensor 43 is preferably mounted to the front part 12 of the elongated body 6 or to the tool part 4, but it may as an alternative be mounted to any other suitable part of the elongated body 6.

The electronic control unit 41 is configured to receive the measuring signals from the at least one vibration sensor 43 and to control the supply of electric current to the actuators 16 in dependence on these measuring signals in order to control the generation of vibratory forces in each actuator 16 in dependence on these measuring signals and thereby counteract the vibrations induced in the boring bar 2 by the cutting forces Fᵣ, Fₜ acting on the cutting element 5 during machining of a workpiece.

The invention is of course not in any way restricted to the embodiments described above. On the contrary, many possibilities to modifications thereof will be apparent to a person with ordinary skill in the art without departing from the invention as defined in the appended claims. In some applications, damping in the direction of the radial cutting force requires twice as much energy as in the tangential direction. Thus, the boring bar may comprise three damping actuators, wherein two of them have their respective working axis oriented in the same way, preferably perpendicular to said reference line L, i.e. oriented in the direction of the radial cutting force, and the third one may have its working axis oriented in parallel to the reference line L and perpendicular to the working axis of the other two actuators.

## Claims

1. A boring bar (2) for a non-rotating boring tool, the boring bar (2) comprising:
- an elongated body (6) configured for attachment to a support structure of a metal cutting machine, the elongated body (6) having a rear end (6b) and an opposite front end (6a), the front end (6a) being arranged to carry a tool part (4) provided with a cutting element (5); and
- at least two electrically controlled vibration actuators (16) for active vibration damping of the boring bar (2), each one of these at least two actuators (16) comprising a moveably arranged damping mass (16a) and being configured, by movement of the damping mass, to generate vibratory forces in parallel or at least substantially in parallel with a working axis (17) of the actuator that is perpendicular to a centre axis (15) of the damping mass (16a), wherein each one of these at least two actuators (16) is a single-axis actuator having one single working axis (17), and wherein these at least two actuators (16) are arranged with their working axes (17) angularly offset from each other,
**characterized in that**
said at least two actuators (16) are arranged in a longitudinal series in the elongated body (6) with the centre axis (15) of the damping mass (16a) of each one of these actuators (16) coinciding or substantially coinciding with a longitudinal axis (7) of the elongated body (6),
wherein
the elongated body (6) comprises:
• an elongated main part (10) configured for attachment to a support structure of a metal cutting machine, the main part (10) having a rear end (10b) and an opposite front end (10a),
• a front part (12) having a rear end (12b) facing the front end (10a) of the main part (10) and an opposite front end (12a), the front end (12a) of the front part (12) being arranged to carry said tool part (4), and
• at least one damping module (14) arranged between the front end (10a) of the main part (10) and the rear end (12b) of the front part (12) and accommodating one or more of said at least two actuators (16); and
wherein
the front part (12) of the elongated body (6) is connected to the main part (10) thereof via the at least one damping module (14), wherein the at least one damping module (14) constitutes a length section of the elongated body (6).

2. A boring bar according to claim 1, **characterized in that** said at least two actuators (16) are n in number, wherein n≥2, and are so arranged in the elongated body (6) that each one of these n actuators has its working axis (17) oriented at an angle of 180°/n to another one of these n actuators, wherein these n actuators have their respective working axes (17) evenly angularly distributed, and wherein the working axis (17) of each one of these n actuators (16) has an individual angular orientation that is different from the angular orientations of the working axes of the other ones of these n actuators.

3. A boring bar according to claim 2, **characterized in that** each couple of adjacent actuators (16) are arranged such that their working axes (17) are oriented at an angle of 180°/n to each other.

4. A boring bar according to any of the claims 1 - 3, **characterized in that** the at least one damping module (14) has the same cross-sectional outer peripheral shape as the main part (10) and/or the front part (12).

5. A boring bar according to any of the claims 1 - 4, **characterized in that** the main part (10) and/or the front part (12) and/or the at least one damping module (14) are cylindrical, preferably circular cylindrical.

6. A boring bar according to any of claims 1-5, **characterized in that** an external periphery (18) of the main part (10) and an external periphery (19) of the at least one damping module (14) are flush or substantially flush with each other.

7. A boring bar according to any of claims 1- 6, **characterized in that** the at least one damping module (14) is clamped between the main part (10) and the front part (12) by means of tie rods (22), which preferably extend through passages (23) in the at least one damping module (14).

8. A boring bar according to any of claims 1-7, **characterized in that** the front part (12) of the elongated body is adjustable in its rotary position in relation to the at least one damping module (14).

9. A boring bar according to any of claims 1-8, **characterized in that** said at least two actuators (16) are accommodated in the same damping module (14).

10. A boring bar according to any of claims 1-9, **characterized in that** the elongated body (6) comprises at least two such damping modules (14) arranged in series with each other between the front end (10a) of the main part (10) and the rear end (12b) of the front part (12), wherein said at least two actuators (16) are arranged in different ones of these damping modules (14).

11. A non-rotating boring tool, **characterized in that** it comprises:
- a boring bar (2) according to any of claims 1-10; and
- a tool part (4) provided with a cutting element (5), wherein this tool part (4) is detachably attached to or integrally formed with the front end (6a) of the elongated body.

12. A non-rotating boring tool according to claim 11, **characterized in that** said tool part (4) is adjustable in its rotary position in relation to the elongated body (6).

13. A non-rotating boring tool according to claim 11 or 12, **characterized in that** the cutting element (5) comprises a rake side (30), a relief surface (32) and a cutting edge (33) formed at an intersection between the rake side and the relief surface, wherein when seen in a cross-sectional plane that is perpendicular to the longitudinal axis (7) of the elongated body (6) and intersects the cutting edge (33) in a radially outermost point (39), a straight and imaginary reference line L intersects the cutting edge (33) in the radially outermost point (39) and extends in this cross-sectional plane at an angle (β) of 6° to the relief surface (32) on the outside of the cutting element (5), and wherein when seen in this cross-sectional plane, the working axis (17) of the actuator (16) closest to the front end (6a) of the elongated body:
• forms an angle of 90°±10° to said reference line L, preferably an angle of 90°±5°, more preferably an angle of 90°±1°, or
• forms an angle of 0°±1 0°to said reference line L, preferably an angle of 0°±5°, more preferably an angle of 0°±1°.

14. A non-rotating boring tool according to any of claims 11-13, **characterized in that** the boring tool (1) comprises at least one vibration sensor (43) mounted to the elongated body (6) at the front end (6a) thereof or to said tool part (4).

15. A boring arrangement, **characterized in that** it comprises:
- a boring bar (2) according to any of claims 1-10; and
- an electronic control unit (41) configured to control the electric current to said at least two actuators (16) in order to control the generation of vibratory forces in these actuators.

16. A boring arrangement according to claim 15, **characterized in:**
- **that** the boring arrangement (40) comprises at least one vibration sensor (43) configured to generate measuring signals related to the vibration of the boring bar (2) and to send the measuring signals to the electronic control unit (41); and
- **that** the electronic control unit (41) is configured to receive the measuring signals from the at least one vibration sensor (43), wherein the electronic control unit (41) is configured to control the electric current to said at least two actuators (16) in dependence on the measuring signals from the at least one vibration sensor (43) in order to control the generation of vibratory forces in these actuators (16) in dependence on these measuring signals.

## Patentansprüche

1. Bohrstange (2) für ein nicht-rotierendes Bohrwerkzeug, wobei die Bohrstange (2) Folgendes aufweist:
- einen länglichen Körper (6), der zur Anbringung an einer Stützstruktur einer Metallschneidmaschine eingerichtet ist, wobei der längliche Körper (6) ein hinteres Ende (6b) und ein gegenüberliegendes vorderes Ende (6a) aufweist, wobei das vordere Ende (6a) so eingerichtet ist, dass es ein Werkzeugteil (4) trägt, das mit einem Schneidelement (5) versehen ist, und
- wenigstens zwei elektrisch gesteuerte Vibrationsaktoren (16) zur aktiven Vibrationsdämpfung der Bohrstange (2), wobei jeder dieser wenigstens zwei Aktoren (16) eine beweglich angeordnete Dämpfungsmasse (16a) aufweist und so eingerichtet ist, dass durch Bewegung der Dämpfungsmasse Schwingungskräfte parallel oder zumindest im Wesentlichen parallel zu einer zu einer zentralen Achse (15) der Dämpfungsmasse (16a) senkrechten Arbeitsachse (17) des Aktors erzeugt werden, wobei jeder dieser wenigstens zwei Aktoren (16) ein einachsiger Aktor mit einer einzigen Arbeitsachse (17) ist, und wobei diese wenigstens zwei Aktoren (16) mit ihren Arbeitsachsen (17) winkelversetzt zueinander angeordnet sind,
**dadurch gekennzeichnet, dass**
die wenigstens zwei Aktoren (16) in dem länglichen Körper (6) in einer Längsreihe angeordnet sind, wobei die Mittelachse (15) der Dämpfungsmasse (16a) jedes dieser Aktoren (16) mit einer Längsachse (7) des länglichen Körpers (6) zusammenfällt oder im Wesentlichen zusammenfällt,
wobei
der längliche Körper (6) folgendes aufweist:
- ein längliches Hauptteil (10), das zur Anbringung an einer Stützstruktur einer Metallschneidemaschine eingerichtet ist, wobei das Hauptteil (10) ein hinteres Ende (10b) und ein vorderes Ende (10a) aufweist,
- ein Vorderteil (12) mit einem hinteren Ende (12b), das dem vorderen Ende (10a) des Hauptteils (10) zugewandt ist, und einem gegenüberliegenden vorderen Ende (12a), wobei das vordere Ende (12a) des Vorderteils (12) so angeordnet ist, dass es das Werkzeugteil (4) trägt, und
- wenigstens ein Dämpfungsmodul (14), das zwischen dem vorderen Ende (10a) des Hauptteils (10) und dem hinteren Ende (12b) des Vorderteils (12) angeordnet ist und einen oder mehrere der wenigstens zwei Aktoren (16) aufnimmt, und
wobei
das Vorderteil (12) des länglichen Körpers (6) mit dem Hauptteil (10) desselben über das wenigstens eine Dämpfungsmodul (14) verbunden ist, wobei das wenigstens eine Dämpfungsmodul (14) einen Längenabschnitt des länglichen Körpers (6) bildet.

2. Bohrstange nach Anspruch 1, **dadurch gekennzeichnet, dass** die wenigstens zwei Aktoren (16) n an der Zahl sind, wobei n≥2, und in dem länglichen Körper (6) so angeordnet sind, dass jeder dieser n Aktoren seine Arbeitsachse (17) in einem Winkel von 180°/n zu einem anderen dieser n Aktoren ausgerichtet hat, wobei die jeweiligen Arbeitsachsen (17) dieser n Aktoren winklig gleichmäßig verteilt sind, und wobei die Arbeitsachse (17) jedes dieser n Aktoren (16) eine individuelle Winkelausrichtung aufweist, die sich von den Winkelausrichtungen der Arbeitsachsen der anderen dieser n Aktoren unterscheidet.

3. Bohrstange nach Anspruch 2, **dadurch gekennzeichnet, dass** jedes Paar benachbarter Aktoren (16) so angeordnet ist, dass ihre Arbeitsachsen (17) in einem Winkel von 180°/n zueinander ausgerichtet sind.

4. Bohrstange nach einem der Ansprüche 1 bis 3, **dadurch gekennzeichnet, dass** das wenigstens eine Dämpfungsmodul (14) die gleiche querschnittliche Außenumfangsform aufweist wie das Hauptteil (10) und/oder das Vorderteil (12).

5. Bohrstange nach einem der Ansprüche 1-4, **dadurch gekennzeichnet, dass** das Hauptteil (10) und/oder das Vorderteil (12) und/oder das wenigstens eine Dämpfungsmodul (14) zylindrisch, vorzugsweise kreiszylindrisch, ausgebildet sind.

6. Bohrstange nach einem der Ansprüche 1-5, **dadurch gekennzeichnet, dass** ein Außenumfang (18) des Hauptteils (10) und ein Außenumfang (19) des wenigstens einen Dämpfungsmoduls (14) bündig oder im Wesentlichen bündig zueinander sind.

7. Bohrstange nach einem der Ansprüche 1 bis 6, **dadurch gekennzeichnet, dass** das wenigstens eine Dämpfungsmodul (14) zwischen dem Hauptteil (10) und dem Vorderteil (12) mittels Verbindungsstangen (22) eingespannt ist, die sich vorzugsweise durch Durchlässe (23) in dem wenigstens einen Dämpfungsmodul (14) erstrecken.

8. Bohrstange nach einem der Ansprüche 1 bis 7, **dadurch gekennzeichnet, daß** das Vorderteil (12) des länglichen Körpers in seiner Rotationsposition gegenüber dem wenigstens einen Dämpfungsmodul (14) verstellbar ist.

9. Bohrstange nach einem der Ansprüche 1-8, **dadurch gekennzeichnet, dass** die wenigstens zwei Aktoren (16) in demselben Dämpfungsmodul (14) untergebracht sind.

10. Bohrstange nach einem der Ansprüche 1-9, **dadurch gekennzeichnet, dass** der längliche Körper (6) wenigstens zwei derartige Dämpfungsmodule (14) aufweist, die zwischen dem vorderen Ende (10a) des Hauptteils (10) und dem hinteren Ende (12b) des Vorderteils (12) in Reihe miteinander angeordnet sind, wobei die wenigstens zwei Aktoren (16) in verschiedenen dieser Dämpfungsmodule (14) angeordnet sind.

11. Nicht-rotierendes Bohrwerkzeug, **dadurch gekennzeichnet, dass** es Folgendes aufweist:
- eine Bohrstange (2) nach einem der Ansprüche 1-10 und
- ein mit einem Schneidelement (5) versehenes Werkzeugteil (4), wobei dieses Werkzeugteil (4) lösbar am vorderen Ende (6a) des länglichen Körpers angebracht oder mit diesem einstückig ausgebildet ist.

12. Nicht-rotierendes Bohrwerkzeug nach Anspruch 11, **dadurch gekennzeichnet, dass** das Werkzeugteil (4) in seiner Rotationsposition in Bezug auf den länglichen Körper (6) einstellbar ist.

13. Nicht-rotierendes Bohrwerkzeug nach Anspruch 11 oder 12, **dadurch gekennzeichnet, dass** das Schneidelement (5) eine Spanseite (30), eine Freifläche (32) und eine Schneide (33) aufweist, die an einem Übergang zwischen der Spanseite und der Freifläche gebildet ist, wobei, wenn man es in einer Querschnittsebene betrachtet, die senkrecht zu der Längsachse (7) des länglichen Körpers (6) ist und die Schneidkante (33) in einem radial äußersten Punkt (39) schneidet, eine gerade und gedachte Bezugslinie L die Schneidkante (33) im radial äußersten Punkt (39) schneidet und in dieser Querschnittsebene unter einem Winkel (β) von 6° zur Freifläche (32) an der Außenseite des Schneidelements (5) verläuft, und wobei, wenn man es in dieser Querschnittsebene betrachtet, die Arbeitsachse (17) des Aktors (16), die dem vorderen Ende (6a) des länglichen Körpers am nächsten liegt:
- einen Winkel von 90°±10° mit der Bezugslinie L ausbildet, vorzugsweise einen Winkel von 90°±5°, noch bevorzugter einen Winkel von 90°±1°, oder
- einen Winkel von 0°±10° mit der Bezugslinie L ausbildet, vorzugsweise einen Winkel von 0°±5°, besonders bevorzugt einen Winkel von 0°±1 °.

14. Nicht-rotierendes Bohrwerkzeug nach einem der Ansprüche 11-13, **dadurch gekennzeichnet, dass** das Bohrwerkzeug (1) wenigstens einen Vibrationssensor (43) aufweist, der an dem länglichen Körper (6) an dessen vorderem Ende (6a) oder an dem Werkzeugteil (4) montiert ist.

15. Bohrvorrichtung, **dadurch gekennzeichnet, dass** sie Folgendes aufweist:
- eine Bohrstange (2) nach einem der Ansprüche 1-10, und
- eine elektronische Steuereinheit (41), die eingerichtet ist, um den elektrischen Strom zu den wenigstens zwei Aktoren (16) zu steuern, um die Erzeugung von Schwingungskräften in diesen Aktoren zu steuern.

16. Bohranordnung nach Anspruch 15, **dadurch gekennzeichnet, dass**:
- die Bohranordnung (40) wenigstens einen Vibrationssensor (43) aufweist, der so ausgebildet ist, dass er Messsignale in Bezug auf die Vibration der Bohrstange (2) erzeugt und die Messsignale an die elektronische Steuereinheit (41) sendet, und
- die elektronische Steuereinheit (41) so eingerichtet ist, dass sie die Messsignale von dem wenigstens einen Vibrationssensor (43) empfängt, wobei die elektronische Steuereinheit (41) so eingerichtet ist, dass sie den elektrischen Strom zu den wenigstens zwei Aktoren (16) in Abhängigkeit von den Messsignalen von dem wenigstens einen Vibrationssensor (43) steuert, um die Erzeugung von Schwingungskräften in diesen Aktoren (16) in Abhängigkeit von diesen Messsignalen zu steuern.

## Revendications

1. Barre d'alésage (2) destinée à un outil d'alésage non rotatif, la barre d'alésage (2) comprenant :
- un corps allongé (6) configuré pour être attaché à une structure de support d'une machine de découpe de métal, le corps allongé (6) présentant une extrémité arrière (6b) et une extrémité avant opposée (6a), l'extrémité avant (6a) étant agencée pour porter une partie d'outil (4) dotée d'un élément de coupe (5) ; et
- au moins deux actionneurs de vibrations commandés électriquement (16) destinés à activer un amortissement de vibrations de la barre d'alésage (2), chacun de ces au moins deux actionneurs (16) comprenant un poids d'amortissement agencé de manière mobile (16a) et étant configuré, par déplacement du poids d'amortissement, pour générer des forces vibratoires parallèles ou au moins sensiblement parallèles à un axe de travail (17) de l'actionneur qui est perpendiculaire à un axe central (15) du poids d'amortissement (16a), où chacun de ces au moins deux actionneurs (16) est un actionneur à unique axe présentant un unique axe de travail (17), et où ces au moins deux actionneurs (16) sont agencés avec leurs axes de travail (17) angulairement décalés l'un de l'autre,
**caractérisée en ce que**
lesdits au moins deux actionneurs (16) sont agencés en une série longitudinale dans le corps allongé (6), l'axe central (15) du poids d'amortissement (16a) de chacun de ces actionneurs (16) coïncidant ou coïncidant sensiblement avec un axe longitudinal (7) du corps allongé (6), où
le corps allongé (6) comprend :
• une partie principale allongée (10) configurée pour être attachée à une structure de support d'une machine de découpe de métal, la partie principale (10) présentant une extrémité arrière (10b) et une extrémité avant opposée (10a),
• une partie avant (12) présentant une extrémité arrière (12b) faisant face à l'extrémité avant (10a) de la partie principale (10) et une extrémité avant opposée (12a), l'extrémité avant (12a) de la partie avant (12) étant agencée pour porter ladite partie d'outil (4), et
• au moins un module d'amortissement (14) agencé entre l'extrémité avant (10a) de la partie principale (10) et l'extrémité arrière (12b) de la partie avant (12) et logeant un ou plusieurs desdits au moins deux actionneurs (16) ; et
où la partie avant (12) du corps allongé (6) est reliée à la partie principale (10) de celui-ci via le au moins un module d'amortissement (14), où le au moins un module d'amortissement (14) constitue une section de longueur du corps allongé (6).

2. Barre d'alésage selon la revendication 1, **caractérisée en ce que** lesdits au moins deux actionneurs (16) sont au nombre de n, où n ≥ 2, et sont agencés de telle manière dans le corps allongé (6) que chacun de ces n actionneurs a son axe de travail (17) orienté à un angle de 180°/n par rapport à un autre de ces n actionneurs, où ces n actionneurs ont leurs axes de travail respectifs (17) régulièrement répartis de manière angulaire, et où l'axe de travail (17) de chacun de ces n actionneurs (16) a une orientation angulaire propre qui est différente des orientations angulaires des axes de travail des autres de ces n actionneurs.

3. Barre d'alésage selon la revendication 2, **caractérisée en ce que** pour chaque paire d'actionneurs adjacents (16), ceux-ci sont agencés de telle sorte que leurs axes de travail (17) sont orientés à un angle de 180°/n l'un par rapport à l'autre.

4. Barre d'alésage selon l'une quelconque des revendications 1 à 3, **caractérisée en ce que** le au moins un module d'amortissement (14) présente la même forme périphérique extérieure en coupe transversale que la partie principale (10) et/ou la partie avant (12).

5. Barre d'alésage selon l'une quelconque des revendications 1 à 4, **caractérisée en ce que** la partie principale (10) et/ou la partie avant (12) et/ou le au moins un module d'amortissement (14) sont cylindriques, de préférence cylindriques circulaires.

6. Barre d'alésage selon l'une quelconque des revendications 1 à 5, **caractérisée en ce qu'**une périphérie externe (18) de la partie principale (10) et une périphérie externe (19) du au moins un module d'amortissement (14) sont à fleur ou sensiblement à fleur l'une par rapport à l'autre.

7. Barre d'alésage selon l'une quelconque des revendications 1 à 6, **caractérisée en ce que** le au moins un module d'amortissement (14) est fixé entre la partie principale (10) et la partie avant (12) au moyen de tiges d'attache (22), lesquelles s'étendent de préférence à travers des passages (23) dans le au moins un module d'amortissement (14).

8. Barre d'alésage selon l'une quelconque des revendications 1 à 7, **caractérisée en ce que** la partie avant (12) du corps allongé est réglable dans sa position de rotation par rapport au au moins un module d'amortissement (14).

9. Barre d'alésage selon l'une quelconque des revendications 1 à 8, **caractérisée en ce que** lesdits au moins deux actionneurs (16) sont logés dans le même module d'amortissement (14).

10. Barre d'alésage selon l'une quelconque des revendications 1 à 9, **caractérisée en ce que** le corps allongé (6) comprend au moins deux tels modules d'amortissement (14) agencés en série l'un après l'autre entre l'extrémité avant (10a) de la partie principale (10) et l'extrémité arrière (12b) de la partie avant (12), où lesdits au moins deux actionneurs (16) sont agencés dans des modules différents parmi ces modules d'amortissement (14).

11. Outil d'alésage non rotatif, **caractérisé en ce qu'**il comprend :
- une barre d'alésage (2) selon l'une quelconque des revendications 1 à 10 ; et
- une partie d'outil (4) dotée d'un élément de coupe (5), où cette partie d'outil (4) est fixée de manière amovible sur ou formée de manière solidaire avec l'extrémité avant (6a) du corps allongé.

12. Outil d'alésage non rotatif selon la revendication 11, **caractérisé en ce que** ladite partie d'outil (4) est réglable dans sa position de rotation par rapport au corps allongé (6).

13. Outil d'alésage non rotatif selon la revendication 11 ou 12, **caractérisé en ce que** l'élément de coupe (5) comprend un côté d'attaque (30), une surface en évidement (32) et une arête de coupe (33) formée au niveau d'une intersection entre le côté d'attaque et la surface en évidement, où selon une vue d'observation dans un plan de coupe transversale qui est perpendiculaire à l'axe longitudinal (7) du corps allongé (6) et coupe l'arête de coupe (33) en un point radialement le plus à l'extérieur (39), une droite de référence imaginaire L coupe l'arête de coupe (33) en le point radialement le plus à l'extérieur (39) et s'étend dans ce plan de coupe transversal à un angle (β) de 6° par rapport à la surface en évidement (32) à l'extérieur de l'élément de coupe (5), et où selon une vue d'observation dans ce plan de coupe transversale, l'axe de travail (17) de l'actionneur (16) le plus proche de l'extrémité avant (6a) du corps allongé :
• forme un angle de 90° ± 10° par rapport à ladite droite de référence L, de préférence un angle de 90° ± 5°, de façon davantage préférée un angle de 90° ± 1°, ou
• forme un angle de 0° ± 10° par rapport à ladite droite de référence L, de préférence un angle de 0° ± 5°, de façon davantage préférée un angle de 0° ± 1°.

14. Outil d'alésage non rotatif selon l'une quelconque des revendications 11 à 13, **caractérisé en ce que** l'outil d'alésage (1) comprend au moins un capteur de vibrations (43) monté sur le corps allongé (6) au niveau de l'extrémité avant (6a) de celui-ci ou sur ladite partie d'outil (4).

15. Agencement d'alésage, **caractérisé en ce qu'**il comprend :
- une barre d'alésage (2) selon l'une quelconque des revendications 1 à 10 ; et
- une unité de commande électronique (41) configurée pour commander le courant électrique fourni auxdits au moins deux actionneurs (16) de sorte à commander la génération de forces vibratoires dans ces actionneurs.

16. Agencement d'alésage selon la revendication 15, **caractérisé en ce :**
- **que** l'agencement d'alésage (40) comprend au moins un capteur de vibrations (43) configuré pour générer des signaux de mesure associés à la vibration de la barre d'alésage (2) et pour envoyer les signaux de mesure à l'unité de commande électronique (41) ; et en ce
- **que** l'unité de commande électronique (41) est configurée pour recevoir les signaux de mesure provenant du au moins un capteur de vibrations (43), où l'unité de commande électronique (41) est configurée pour commander le courant électrique fourni auxdits au moins deux actionneurs (16) en fonction des signaux de mesure provenant du au moins un capteur de vibrations (43) de sorte à commander la génération de forces vibratoires dans ces actionneurs (16) en fonction de ces signaux de mesure.
